(19) **Europäisches Patentamt**
**European Patent Office**
**Office européen des brevets**

(11) **EP 3 649 478 B1**

(12) **EUROPEAN PATENT SPECIFICATION**

(45) Date of publication and mention
of the grant of the patent:
**16.03.2022 Bulletin 2022/11**

(51) International Patent Classification (IPC):
**G01S 7/35** *(2006.01)*    **G01S 13/34** *(2006.01)*
**G01S 13/536** *(2006.01)*    **G01S 13/93** *(2020.01)*

(21) Application number: **18746379.9**

(22) Date of filing: **05.07.2018**

(52) Cooperative Patent Classification (CPC):
**G01S 7/354; G01S 13/342; G01S 13/343;
G01S 13/536; G01S 13/931;** G01S 7/356;
G01S 7/358

(86) International application number:
**PCT/US2018/040848**

(87) International publication number:
**WO 2019/010259 (10.01.2019 Gazette 2019/02)**

(54) **RADAR SYSTEMS AND METHODS UTILIZING COMPOSITE WAVEFORMS FOR CUSTOMIZATION OF RESOLUTION REQUIREMENTS**

RADARSYSTEM UND -VERFAHREN, DASS ZUSAMMENGESETZE WELLENFORMEN NUTZ ZUR ANPASSUNG AN AUFLÖSUNGSANFORDERUNGEN

SYSTÈME RADAR ET PROCÉDÉ UTILISANT DES FORMES D'ONDE POUR AJUSTER AUX EXIGENCES DE RÉSOLUTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.07.2017 US 201715643636
07.07.2017 US 201715643644**

(43) Date of publication of application:
**13.05.2020 Bulletin 2020/20**

(73) Proprietor: **Veoneer US, Inc.
Southfield, MI 48034 (US)**

(72) Inventors:
• **HAN, Qh
Southfield
MI 48034 (US)**
• **KLOTZBUECHER, Dirk
97320 Mainstockheim (DE)**

(74) Representative: **Mewburn Ellis LLP
Aurora Building
Counterslip
Bristol BS1 6BX (GB)**

(56) References cited:
**EP-A- 3 015 880       DE-A1-102009 057 191
US-A1- 2015 002 332       US-A1- 2015 084 806**

## Description

## CROSS-RELATED APPLICATION

This application claims priority to and benefit of U.S. Patent Application No. 15/643,636, filed July 7, 2017, entitled, "Systems and Methods for Resolving Velocity Ambiguity in an Automotive Radar System,". This application also claims priority to and benefit of U.S. Patent Application No. 15/643,644, filed July 7, 2017, entitled, "Radar Systems and Methods Utilizing Composite Waveforms for Customization of Resolution Requirements".

## BACKGROUND

### Technical Field

The present disclosure is related to frequency ambiguity resolution in a LFMCW (Linear Frequency Modulated continuous waveform) pulse-Doppler radar system such as an automotive radar system. More particularly, the systems and methods of the present disclosure enable determination of true target velocity. The present disclosure may have particular applicability in the context of a multiple target environment, e.g., wherein targets having different speeds may be grouped together on account of velocity aliasing.

### Background

A pulse-Doppler radar system is a radar system that determines the range to a target using pulse-timing techniques, and uses the Doppler effect of the returned signal to determine the target object's velocity. LFMCW measure range by the frequency shift of Mixer output. LFMCW pulse-Doppler radar combines the features of pulse radars and continuous-wave radars. Pulse-Doppler systems generally measure the range to objects by measuring the elapsed time between sending a pulse and receiving a reflection from the object. In particular, since waves travel at the speed of light, the distance to a target can be calculated based on elapsed time multiplied by the speed of light divided by two. Velocity is generally determined based on the Doppler shift (frequency shift) of the reflected signal. In particular, as the target moves between each transmit pulse, the returned signal has a phase difference or phase shift from pulse to pulse. This causes the target to produce Doppler modulation on the reflected signal. Thus, the radar to separate the reflections from multiple targets located in the same volume of space by identifying the targets using respective phase shifts.

Pulse-Doppler begins with pulses (e.g., coherent pulses) transmitted through an antenna or transducer. Energy from the transmitted pulses propagates through space until it is reflected by some reflector object (i.e., a target object). This disruption causes some of the transmit energy to be reflected back to the radar antenna or transducer, along with phase modulation caused by the radial velocity of the reflector (relative to the sensor/detector). Typically the received signal is down-converted to base-band (based on the initial transmit) prior to processing. Sampling begins after each transmit pulse sequence. Sampling is typically divided into equal sample intervals (or bins). After sampling is completed the next pulse sequence is transmitted.

Pulse-Doppler signal processing involves with I and Q sampling of the received signal. In particular, the wave-front from the reflector forms a spiral pattern which the receiver converts into two electrical samples called I and Q. Typically, the local oscillator is split into two signals that are offset by 90 degrees, and each goes to two different detectors along with the receive signal. One detector produces I(t) and the other produces Q(t). An example detection automotive radar system is later described in greater detail herein.

Notably, there are two types of ambiguity which arise during sampling. Distance ambiguity occurs where a single sample period may include reflections from multiple transmit periods. In this case, the elapsed time from transition to detection can be characterized as the elapsed time from the last transmit period plus some multiple of the transmit cycle period (thus, illustrating the ambiguity). Velocity ambiguity likewise arises where phase shifts can only be distinguished within a full period of the signal. Thus, velocities that produce phase shifts offset from one another by a multiples of the period would be indistinguishable (i.e., would have the same I and Q values. Note that there is typically a tradeoff between distance ambiguity and velocity ambiguity. The lower the pulse repetition frequency (PRF) the larger the range of ambiguous distance values, however, this in turn results in a narrower range of ambiguous velocity values (since velocity can only unambiguously distinguish where the Doppler frequency is lower than the PRF).

During processing, reflected signals are typically separated into a number of frequency filters. There is a separate set of filters for each ambiguous range (velocity and distance). The I and Q samples described above are used to begin the filtering process. Typically, these samples are organized into a matrix of time domain samples. Time domain samples are then converted to the frequency domain using a digital filter. This usually involves a fast Fourier transform (FFT). Note that sidelobes and other artifacts resulting during signal processing may be suppressed, e.g., by implementing an appropriate windowing function.

For example, in some embodiments it may be possible to obtain object resolution within one or more of three measurement categories: 1) Range Resolution: range resolution (Rres) follows a function of Tx (transmit) frequency bandwidth (BW), where Rres = ½ · Co / BW. Typically, the bandwidth is limited for regulatory reasons. 2) Angular Resolution Ares): angular resolution can be estimated as a function of the effective antenna aperture (i.e. Deff), where Ares is estimated as ½ · Π · λ / Deff. 3) Doppler (velocity) Resolution: Doppler resolution (also known as velocity resolution) Vres is determined as a function of dwell time (i.e. Td), where Vres = (½ Co) / (Td · Fo). For example, a radar may dwell at a particular discrete range to search for the presence of objects at that range before indexing to the next in a sequence of discrete ranges. Notably, regarding dwell time, Doppler resolution may in preferred embodiments be at least 0.5 km/h which at 77GHz requires a 14ms dwell time. The amount of data to be processed, however, is linearly related to recording time which have implications for processor load and memory consumption. Therefore, memory and processor constraints are important considerations.

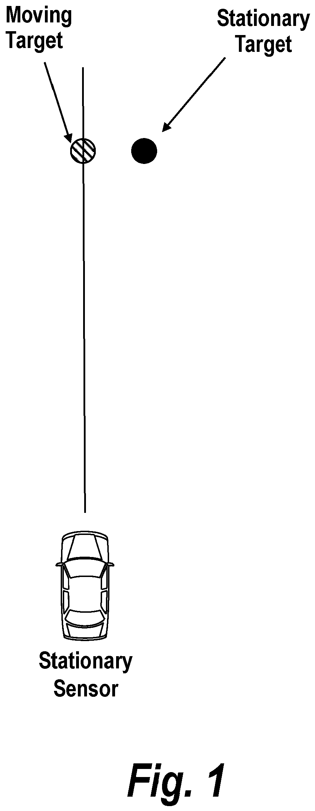

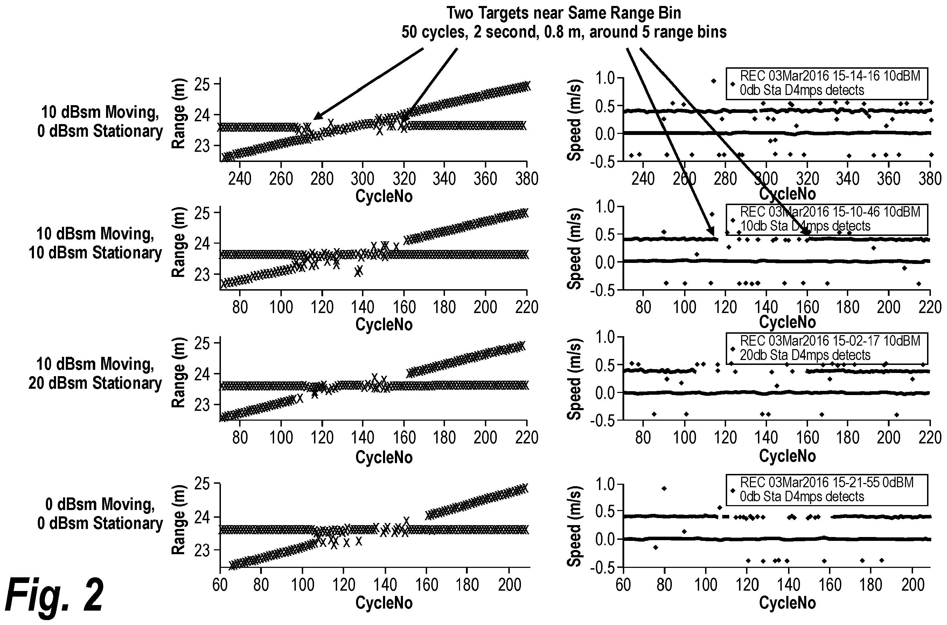

FMCW (Frequency-Modulated Continuous Wave) radar systems are a special type of radar sensor which radiates continuous transmission power like a simple continuous wave (CW) radar. In contrast, however, FMCW radar can change its operating frequency during the measurement: that is, the transmission signal is modulated in frequency (or in phase). Runtime measurements are technically possible with these changes in the frequency (or phase). Simple CW systems without frequency modulation are disadvantaged with respect to target range determination. In contrast with a FMCW signal, when an echo signal is received, that change of frequency gets a delay similar to the pulse radar technique which can advantageously be measured based on differences in phase and/or frequency between the actually transmitted and the received signal. In the context of automotive radar systems, given processing constraints and detection needs can lead to ambiguity and in particular velocity ambiguity. To illustrate, FIG. 1 depicts an experiment where a stationary target and a moving target with a relative velocity equal to the calculated ambiguous range of 0.4m/s for the radar system were each detected. The distance and velocity sample bins are illustrated in FIG. 2 for various target sizes. Note that in FIG. 2, dBsm (decibel relative to one square meter) is used to indicate the (RCS) radar cross-section of the target. For example a larger target such as a large car may have a larger dBsm (e.g., 20 dBsm) while a smaller target such a smaller car may have a smaller dBsm (e.g., 10 dBsm) while a target with a really small reflection size such as a bicycle may have a dBsm close to 0. As demonstrated, regardless of reflection size, there is a significant overlap where the two targets cannot be distinguished due to overlapping ambiguous range and velocity values. Thus, in a multiple target tracking system it becomes particularly critical to provide a degree of ambiguity resolution. These and other needs are met by the systems and methods of the subject application.

US 2015/0002332 A1 describes a method for operating a radar sensor, the unambiguousness range of the radar sensor is increased with respect to the range and/or the relative velocity by: transmitting multiple ramp sets by the radar sensor, the frequency ramps of the individual ramp sets each differing in one system parameter; adapting the sampling frequency during the detection of the radar echoes in such a way that a constant number of samples always results for each frequency ramp; and, to evaluate the radar signals, the spectra are periodically continued and compared to each other.

Notably, the radar system described herein may be used for detecting other vehicles, fixed objects and pedestrians, where pedestrian protection will become of an increased importance. For detection of pedestrians, a radar system should be able to detect objects such as pedestrians at a sufficient distance and to classify detected objects as pedestrians if that is the case, being able to resolve a pedestrian from clutter. Since transmitted signals are often bandwidth restricted it may be difficult to differentiate between pedestrians and clutter using conventional processing.

## SUMMARY

It is an object of the present invention to eliminate or at least alleviate the described problems. This object is achieved by a system in accordance with the appended claim 1. Preferred embodiments are defined in the dependent claims.

Systems and methods are provided herein for resolving velocity ambiguity in an automotive radar system In example embodiments, the systems and methods may employ one or more signal generators configured for generating a transmit signal including a composite linear frequency modulated continuous waveform. This waveform may advantageously be formed by alternating between, interleaving or otherwise combining at least first and second component waveforms. Each component waveform may generally be characterized by a repeated super-pulse sequence (of N super-pulses) with a predetermined cycle time (Tc), each super-pulse cycle including an active phase with a time Ta< Tc and an inactive phase with a time Ti <Tc, wherein Ta+ Ti =Tc. The active phase is typically be characterized by a sequence of a plurality of pulses (M pulses), where each pulse is characterized by a change in frequency between low and high pulse frequencies (Fl to Fh, or Fh to Fl) and has a pulse cycle (Tp) such that Ta = M x Tp. The inactive phase is usually characterized by a pause between respective last and first sub-pulses of sequential super-pulses. Advantageously, each component waveform may be characterized by a different velocity ambiguity. Thus, e.g., the first and second component waveforms may be characterized by the super-pulses of the first and second respective waveforms having one or more of (i) differing numbers of pulses M, (ii) differing pulse durations Td (iii) differing low pulse frequencies Fl (iv) differing high pulse frequencies Fh and/or (v) differing inactive phases Tp whereby the first and second component waveforms are characterized by having different velocity ambiguity ranges.

The systems and methods may further employ a detector for detecting reflected signals from the composite waveform and for determining velocity and distance of a target relative to a host vehicle based on Doppler shift, wherein velocity ambiguity range is different for the respective reflected signals of the component waveforms so as to allow for ambiguity resolution when considered in combination with one another. In example embodiments, true velocity for a target may be determined based on identifying corresponding Doppler bins that correctly reflect ambiguous velocity calculations for both component waveforms.

In example embodiments, the composite waveform may further include alternating between, interleaving or otherwise combining a third component waveform characterized by a different velocity ambiguity range than the first and second component waveforms. In fact the composite waveform may be formed from any number of component waveforms each characterized by a different velocity ambiguity range. Moreover, which in example embodiments, the component waveforms may have a pre-defined structure, e.g., 8 super-pulses each with 16 pulses, the present disclosure is not limited to such an implementation and it will be appreciated that any number of different configurations may be utilized.

In example embodiments, the automotive radar system may advantageously be configured to apply ambiguity resolution only where the host vehicle is in a predetermined range a predetermined velocity. In such embodiments, a lower velocity host vehicle may have a shorter required distance range for detection which may facilitate ambiguity resolution. Alternatively, ambiguity resolution may only be required where a target is within a predetermined range of the host vehicle. Again the predetermined range may be a dynamic range based on the velocity of the host vehicle.

In further example embodiments, a radar system is presented comprising one or more signal generators and a detector. The one or more signal generators may again be configured, for generating a transmit signal including a composite linear frequency modulated continuous waveform formed as described herein. In these further example embodiments the detector may be generally configured for detecting reflected signals from the composite waveform and determining characteristics of a target relative to a host vehicle, wherein the first and second component waveforms are selected such that the composite waveform is able to meet two different sets of resolution requirements and wherein the velocity ambiguity range is different for the respective reflected signals of the component waveforms so as to allow for ambiguity resolution when considered in combination with one another. Advantageously the radar system may further include processor for ambiguity resolution, the processor configured to determine a true velocity for a target based determining corresponding Doppler bins that correctly reflect ambiguous velocity calculations for both component waveforms.

In some embodiments of the radar system, each of the composite waveforms may be configured to meet a different set of resolution requirements. Notably each of the different sets of resolution requirements may be for a different scenario as characterized by target size, target identification, target speed, target position, target range, host vehicle speed and/or environment. For example, a first set of resolution requirements for a first scenario may involve increased maximum range requirements and reduced velocity and range accuracy requirements while a second set of resolution requirements for a second scenario may involve decreased maximum range requirements and increased velocity and range accuracy requirements. In some embodiments, sampling of the composite waveform may be constant. In other embodiments, sampling of the composite waveform may be variable, e.g., for each of the component waveforms and or based on changing resolution requirements.

In further example embodiments, a radar system is presented including one or more signal generators configured for generating a composite radar waveform formed by combining different component waveforms; and a detector for detecting reflected signals from the composite waveform and determining velocity and distance measurements of a target relative to a host vehicle. Advantageously, the first and second component waveforms may be selected such that the composite waveform is able to meet two different sets of resolution requirements with respect to at least one of: (i) the velocity measurement of the target vehicle relative to the host vehicle and (ii) the distance measurement of a target vehicle relative to the host vehicle, wherein each of the different sets of resolution requirements is selected for a different detection scenario.

In some embodiments, the first and second component waveforms each include a series of pulses. For example, the first component waveform may have a different pulse repetition pattern than the second pulse repetition frequency, wherein a first pulse repetition pattern of the first component waveform is selected to meet a first predetermined set of resolution requirements applicable for a first detection scenario and a second pulse repetition pattern of the second component waveform is selected to meet a second predetermined set of resolution requirements applicable for a second detection scenario. Advantageously, the first pulse repetition pattern is characterized by a different pulse repetition frequency than the second pulse repetition pattern. The primary purpose of this may be to customize each waveform to meet a different set of resolution requirements as applicable with respect to a particular scenario. A secondary advantage may be to provide for ambiguity resolution such as described herein.

As noted above, in example embodiments, each component waveform may include a repeated super-pulse sequence (of N super-pulses) with a pre-determined cycle time (Tc), each super-pulse cycle including an active phase with a time Ta < Tc and an inactive phase with a time Ti < Tc, wherein Ta + Ti = Tc, the active phase characterized by a sequence of a plurality of pulses (M pulses) each with a pulse duration Td. Thus, in some embodiments, each component waveform may be characterized by a different cycle time Tc for its repeated super-pulse sequence. For example, the different cycle time Tc may be characterized by a different active phase Ta as characterized by one or more of: (i) a different number of pulses per super-pulse or (ii) a different pulse duration Td. Alternatively, the different cycle time Tc may be characterized by a different inactive phase Ti. Advantageously, each cycle time Tc may provide for a different resolvable range and accuracy of values, e.g., with respect to determining target vehicle distance and or velocity relative to the host vehicle. Note that while some embodiments, the pulses are may be coherent, in further embodiments, each pulse may also characterized by a change in frequency between low and high pulse frequencies (Fl and Fh). Thus, each component waveform may be characterized by one or more of: (i) a different low pulse frequencies Fl or (ii) a different high pulse frequency Fh. Advantageously the different low or high frequencies may again provide for a different resolvable range and accuracy of values, e.g., with respect to determining target vehicle distance and or velocity relative to the host vehicle.

In other embodiments, the first and second component waveforms are not necessarily limited to pulsed waveforms. Thus, in the first and second component waveforms may each be any type of repetitive/patterned waveform. For example, in some embodiments, the first and second component waveforms may each be repetitive oscillation waveforms such as frequency modulated (FM) waveforms (although other types of modulation such as amplitude modulation are also contemplated). As noted above, in example embodiments, oscillations in each of the first and component waveforms vary between low and high pulse frequencies (Fl and Fh), e.g., where each component waveform may be characterized by one or more of: (i) a different low pulse frequencies Fl or (ii) a different high pulse frequency Fh. Note that in some embodiments, the first and second component waveforms are each continuous waveforms.

As previously discussed with respect to different embodiments, the first and second component waveforms may be interleaved to form the composite waveform. Alternatively, the first and second component waveforms may be alternated to form the composite waveform. Interleaved waveforms, e.g., where pulses of one component waveform are interspersed between pulses of the other component waveform, may enable compressed data acquisition and therefor faster processing times. Thus, e.g., in some embodiments, the composite waveform may alternate pulses between each of the component waveforms, e.g., wherein the pulses of first component waveform are characterized by different high and/or low pulse frequencies than the pulses of the second component waveform. Processing of this waveform may include sampling the entire composite waveform and performing a FFT thereon. Notably, the different low and high pulse frequencies may advantageously enable simultaneously satisfying two different sets of resolvable range and accuracy requirements, e.g., with respect to determining target vehicle distance and or velocity relative to the host vehicle. Notably there are other ways that component waveforms may be combined, e.g., via multiplexing thereof. Reflected signals may then be de-multiplexed to analyze the results for each component waveform separately. Alternatively, reflected signals may be analyzed without de-multiplexing, e.g., via a FFT. Advantageously, in some embodiments, a sampling of the composite waveform may be constant. In other embodiments, a sampling of the composite waveform may be variable for each of the component waveforms.

As noted above, the composite waveforms herein advantageously enable satisfying two different sets of resolution requirements, each for a different type of detection scenario. Thus, in example embodiments, each set of resolution requirements may include different accuracy requirements for at least one of: (i) the velocity measurement of the target vehicle relative to the host vehicle and (ii) the distance measurement of the target vehicle relative to the host vehicle. In further embodiments, each set of resolution requirements may include different maximum, minimum or resolvable range requirements for at least one of: (i) the velocity measurement of the target vehicle relative to the host vehicle and (ii) the distance measurement of the target vehicle relative to the host vehicle. Thus, by way of one example, the different sets of resolution requirements may include a first set of resolution requirements for a first scenario involving increased maximum distance resolution requirements and reduced velocity and range accuracy requirements and a second set of resolution requirements for a second scenario involving decreased maximum range requirements and increased velocity and range accuracy requirements. Note that each of the different sets of resolution requirements may be pre-selected for a different detection scenario, e.g., as characterized by target size, target identification, target speed, target position, target range, host vehicle speed and/or environment. Thus, for example, a highway type environment may have different resolution requirements than a city environment or a parking lot environment. Different host vehicle speed may also trigger different resolution requirements because of different stoppage/reaction times.

## BRIEF DESCRIPTION OF THE DRAWINGS

The present disclosure is further described in the detailed description which follows, in reference to the noted plurality of drawings by way of non-limiting examples of embodiments of the present disclosure

FIG. 1 depicts an investigative setup for demonstrating the impact of velocity ambiguity in the context of multiple target vehicles, according to the present disclosure.

**FIG. 2** depicts results from the investigative setup of FIG. 1, according to the present disclosure.

**FIG. 3** depicts a block diagram of an example automotive radar system, according to the present disclosure.

**FIG. 4** depicts an example waveform structure for use with the systems and methods described herein, according to the present disclosure.

**FIGS. 5 and 6** depict velocity ambiguity ranges for example component waveforms, according to the present disclosure.

**FIG. 7** depicts ambiguity resolution based on the example component waveforms of FIGS. 5 and 6, according to the present disclosure.

**FIG. 8** depicts an example search and dwell processing algorithm which may be used to implement the ambiguity resolution techniques described herein, accordingly the present disclosure.

**DETAILED DESCRIPTION**

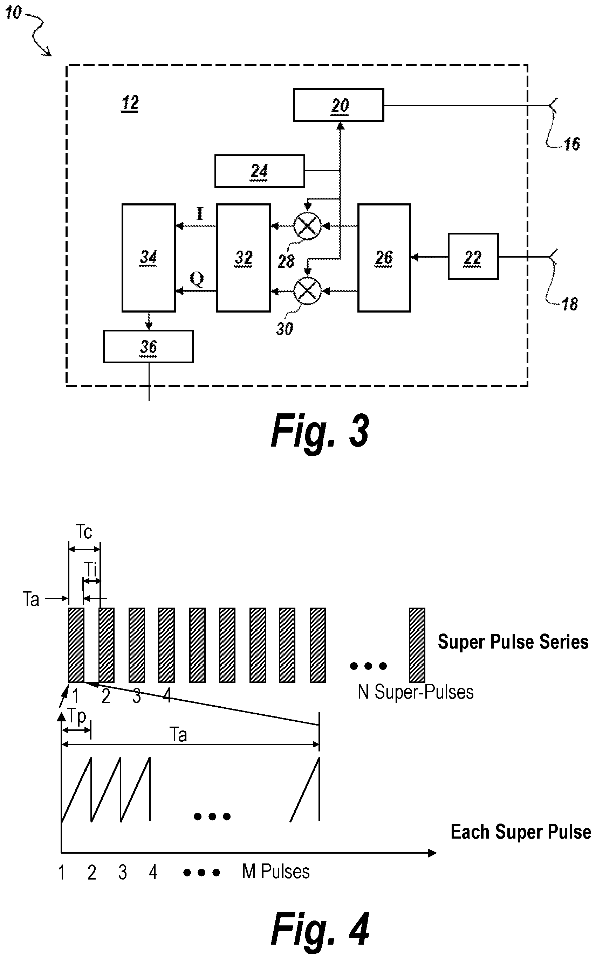

As noted above, the systems and methods described herein may relate to the operations of an automotive radar system. FIG. 3 includes a schematic block diagram of an example automotive radar system 10, including one or more radar sensor modules 12 for processing automotive radar signals, in accordance with some exemplary embodiments. Referring to FIG. 3 radar system 10 includes one or more radar modules 12, which process radar transmit and receive signals which are compatible with radar system 10 in the host vehicle. Radar sensor module 12 generates and transmits radar signals into the region of interest adjacent to the host vehicle that is being monitored by the radar system. Generation and transmission of signals is accomplished by RF signal generator 24, radar transmit circuitry 20 and transmit antenna 16. Radar transmit circuitry 20 generally includes any circuitry required to generate the signals transmitted via transmit antenna 16, such as signal shaping/timing circuitry, transmit trigger circuitry, RF switch circuitry, RF power amplifier circuitry, or any other appropriate transmit circuitry used by radar system 10 to generate the transmitted radar signal according to exemplary embodiments described in detail herein. In some embodiments, the RF signal transmit circuitry 20 may include an RF switch mechanism may rely on inputs from an RF oscillator included in RF signal generator 24. The RF signal transmit circuitry may further advantageously include pulse shaping circuitry, e.g., based on transmit antenna trigonometric calculations.

Radar module 12 also receives returning radar signals at radar receive circuitry 22 via receive antenna 18. Radar receive circuitry 22 generally includes any circuitry required to process the signals received via receive antenna 18, such as RF low noise amplifier circuitry, signal shaping/timing circuitry, receive trigger circuitry, RF switch circuitry, or any other appropriate receive circuitry used by radar system 10. In some embodiments, radar receive circuitry 22 may also include a receiver antenna select module for selecting the receive antenna from a plurality of receive antennas. In some exemplary embodiments, the received signals processed by radar receive circuitry 22 are forwarded to phase shifter circuitry 26, which generates two signals having a predetermined phase difference. These two signals, referred to as an inphase (I) signal and a quadrature (Q) signal, are mixed with an RF signal from RF signal generator 24 by mixers 28 and 30, respectively, to generate I and Q intermediate frequency (IF) signals. In some embodiments mixing may further be based on pulse shaping of the RF signal from the RF signal generator 24 based on receive antenna trigonometric calculations. The resulting IF signals are further filtered as required by filtering circuitry 32 to generate filtered IF I and Q signals, labeled "I" and "Q" in FIG. 3. The IF I and Q signals are digitized by analog-to-digital converter circuitry (ADC) 34. These digitized I and Q IF signals are processed by a processor, such as a digital signal processor (DSP) 36. In some exemplary embodiments, the DSP 36 can perform all of the processing required to carry out the object detection and parameter determination, including object range, bearing and/or velocity determinations, performed by system 10. For example in some embodiments, the digital signals are used for retrieving an azimuth angle of possible targets by simultaneously sampling and analyzing phase and amplitude of the received signals. The analysis is generally performed by means of Fast Fourier Transform (FFT) processing.

It will be understood that the system configuration illustrated in FIG. 3 is exemplary only and that other system configurations can be used to implement the embodiments described herein. For example, the ordering of filtering of the IF signal and analog-to-digital conversion may be different than the order illustrated in FIG. 3. The IF signal may be digitized before filtering, and then digital filtering may be carried out on the digitized signal(s). In other embodiments, the entire IF stage may be removed so that the RF signal is directly converted to DC for further digitizing and processing. The ADC is sampled on one channel only.

Advantageously, the systems and methods described herein utilize a unique waveform model to facilitate ambiguity resolution. This waveform model is illustrated with respect to FIG. 4. In particular, the waveform model is a linear frequency modulated continuous waveform characterized by a repeated super-pulse sequence of N super-pulses (e.g., N = 8 super-pulses). The super-pulses may be characterized by a pre-determined cycle time Tc for each super-pulse. Notably, the super-pulse cycle may typically include an active phase with a time Ta < Tc and an inactive phase with a time Ti < Tc (wherein Ta + Ti = Tc). As depicted, the active phase Ta may be characterized by a sequence of a plurality of M pulses (M = 16 pulses) while the inactive phase Ti may be characterized by a pause between respective last and first sub-pulses of sequential super-pulses. Advantageously, each pulse in the plurality of M pulses may be characterized by a change in frequencies (e.g., a frequency ramp) between low and high pulse frequencies Fl and Fh and may include a pulse cycle Tp (Thus, Ta = M x Tp). While in example embodiments the pulses may be characterized by a uniform (fixed slope) frequency ramp, it is noted that the subject application is not limited to such embodiments. In particular, in alternative embodiments, the change in frequency may be disjointed, stepwise, or otherwise non-uniform provided that the frequency is modulated between the low and high frequencies. Thus, in some embodiments, the plurality of pulses may be implemented as a sawtooth wave or other periodic function. Furthermore, while in example embodiments the change in frequency may start at the low frequency Fl and end at the high frequency Fh, the subject application is not limited to such embodiments. Thus, for example, in alternative embodiments, the change in frequency may start at the high frequency Fh and end at the low frequency Fl, start and stop at a same frequency (e.g., at the low frequency Fl or at the high frequency Fh), or start and/or end at an intermediate frequency between the high and low frequencies.

As described herein, to enable ambiguity resolution, a composite waveform may be formed by alternating between, interleaving or otherwise combining at least two different sets of super-pulses. For example, a first component waveform based on a first set of parameters of the waveform model may include a first set of super-pulses characterized by a first Tc while the second component waveform based on a second set of parameters of the waveform model may include a second set of super-pulses characterized by a second Tc different than the first Tc. In example embodiments, the first and second component waveforms may be characterized by the super-pulses of the first and second respective waveforms having one or more of (i) differing numbers of pulses M, (ii) differing pulse cycle Tp (iii) differing high pulse frequencies Fh (iv) differing low pulse frequencies and/or (iii) differing inactive phases Ti. In general, the goal is to combine component waveforms having different ambiguity ranges, e.g., for velocity. In some embodiments, such a combination may be a sequential alternating between super-pulses of each component waveform. For example, a super-pulse of a first component waveform may be followed by a super-pulse of a second component waveform. In other embodiments, the component waveforms may be interleaved, e.g., where individual pulses of a super-pulse of a second component waveform are synched between individual pulses of a super-pulse of a second component waveform. Notably, the subject application is not limited to such embodiments, however, and other ways of combining component waveforms may also be utilized. For example, in some embodiments, component waveforms may be multiplexed in any way, e.g., via time-division multiplexing, frequency-division multiplexing, polarization-division multiplexing, code-division multiplexing, etc.

As described herein, the velocity ambiguity range may be provided by the following equation:

$$V_{amb} = \frac{C}{T_C * (F_H + F_L)}$$

Note that, as described above, Tc > Ta = M x Tp. Thus, based on the forgoing equation, any change to Tc, Ta, M, Tp, Fh, Fl, or Ti will result in a different $V_{amb}$ (note that in some embodiments, Tc may be changed by changing either Ta or Ti and Ta may be changed by changing M or Tp). Thus, relying on the above principles, the composite waveform may include a sequence of sets of super-pulses wherein at least two different $V_{amb}$ values are reflected in the different sets of super-pulses (e.g., in different composite waveforms which are based on the same waveform model described herein).

Also note that while, example embodiments described herein may be generally illustrated with respect to the use of two different sets of super-pulses, the present disclosure it not limited to such embodiments. Rather, as will be appreciated by a person of ordinary skill in the art, a composite waveform formed by alternating super-pulse sets from first and second composite waveforms may also alternate super-pulse sets from third, fourth fifth (etc.) component waveforms, each based on the waveform model described herein and each advantageously with a different ambiguity range for velocity.

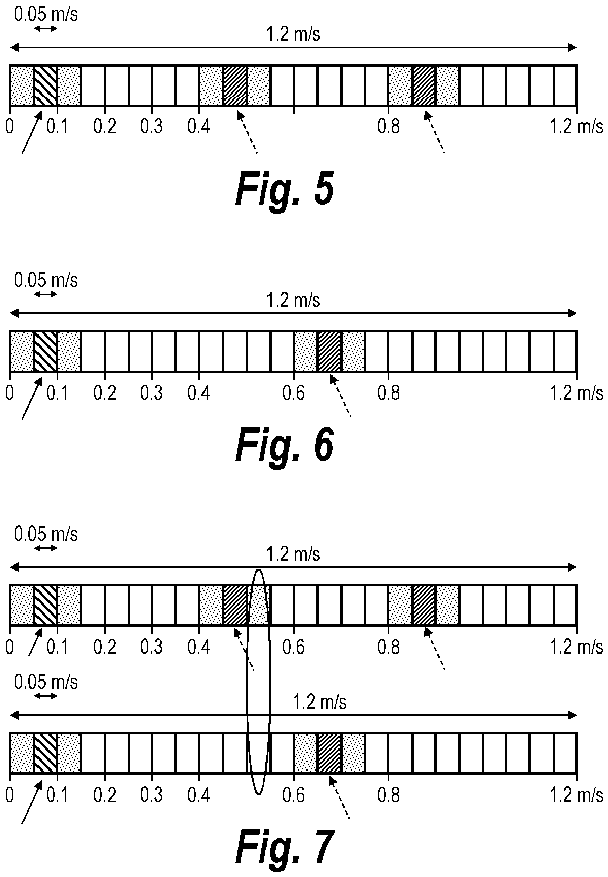

FIGS. 5 and 6 provide illustrate calculation of velocity ambiguity ranges for respective sets of super-pulses. In FIG. 5, the example component waveform is characterized by the following set of parameters (note that $T_{set}$ represents the time cycle time for the entire super-pulse set):

Parameter Set 1

$T_{set} = 40.0$ ms;
$T_c = 4.9$ ms;
$T_p = 50.0$ us;
$F_L = 76.0$ GHz;
$F_H = 77.0$ GHz;
$M = 16$;
$N = 8$;

Using the above equations, the velocity ambiguity range (also known as the Doppler Nyquist) can be calculated as 0.4m/s. This means that there is resulting ambiguity between Doppler bins that represent velocities 0.4m/s apart. Thus, in FIG. 5 if the true target is the bins indicated by the solid arrow, the shaded bins to the right indicated by the dashed arrows represent Doppler bins that are difficult to distinguish in same cycle. Note that the fine Doppler bin in this example is .05m/s (representing the smallest resolvable unit within the ambiguous range).

Similar to the waveform in FIG. 5, the example component waveform in FIG. 6 is characterized by the following parameters (note that they are slightly different than the parameters in FIG. 5 with Tc having been reduced):

Parameter Set 2
$$T_{set} = 40.0 \text{ ms};$$
$$T_c = 3.268 \text{ ms};$$
$$T_p = 50.0 \text{ us};$$
$$F_L = 76.0 \text{ GHz};$$
$$F_H = 77.0 \text{ GHz};$$
$$M = 16;$$
$$N = 8;$$

Again, using the above equations, the velocity ambiguity range (also known as the Doppler Nyquist) can be calculated as 0.6m/s. This means that there is resulting ambiguity between Doppler bins that represent velocities .6m/s apart. Thus, in FIG. 6 if the true target is the bins indicated by the solid arrow, the shaded bins to the right indicated by the dashed arrow represent Doppler bins that are difficult to distinguish in the same cycle. Note that in the examples of FIG. 6, as in FIG. 5 the fine Doppler bin is .05m/s (representing the smallest resolvable unit within the ambiguous range).

As illustrated in FIG. 7, if above two set parameters (from the example component waveforms of FIGS. 5 and 6) are alternatively applied via a composite waveform, the false targets represented by the shaded bins indicated by the dashed arrows can be distinguished from the true target represented by the shaded bins indicated by the solid arrow based on differing corresponding bins of the other component waveform. Thus, by combining data from corresponding bins for the first and second component waveforms, there is no nondistinguishable bin. This combination of data can be implemented in a number of ways.

In example embodiments, sampling for the previous several sets of super-pulses can buffered with combined results generated for every observe cycle. Then the true velocity can be determined, e.g., based on the corresponding Doppler bins that correctly reflect the ambiguous velocity for both component waveforms (e.g., the target would be implicated by an ambiguity velocity of .15 (+some multiple of .4m/s) for the first component waveform and an ambiguity velocity of .55 (+some multiple of .6m/s) for the second component waveform. There is only one combination of corresponding bins that meets this requirement (thereby resolving the ambiguity).

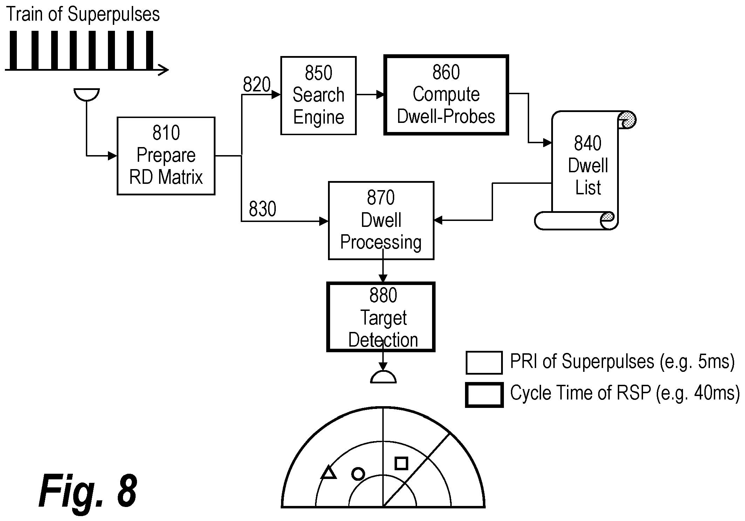

Turning to FIG. 8, it is noted that the ambiguity resolution systems and methods described herein may advantageously be applied in the context of (e.g., as a module of) a larger search and dwell processing (SAD) processing algorithm which may be configured to maximize the performance with limited demand on calculation and memory resources. SAD is the choice balanced for performance and resource demanded. Comparing with the ordinary block processing, SAD has much low demand on RAM memory, with minimized performance change.

The SAD algorithm is described in greater detail in PCT Publication No.WO2016188895. In the SAD algorithm IF signals are sampled at a certain predetermined sampling frequency fs and converted to digital signals. Notably, the sampling frequency fs may be provided by way of a sampling and timing signal produced by a sampling and timing arrangement and may be responsive to changing resolution requirements, e.g., depending on characteristics such as target size, target identification, target speed, target position, target range, host vehicle speed, environment (such as highway vs city vs parking lot), etc. A transceiver arrangement including a DSP may then be adapted for radar signal processing by means of a first FFT (Fast Fourier Transform) to convert the digital signals to a range domain, and a second FFT to combine the results from successive pulses into the Doppler domain thereby producing a two-dimensional spectrum of a Range-Doppler matrix 810. In general, the SAD algorithm involves, processing the Range-Doppler matrix via two parallel processing paths 820 and 830. The first processing path 820 is arranged to produce a periodically updated dwell list 840, and the second processing path 830 is arranged to collect and process data from the Range-Doppler matrix 810 in dependence of the present dwell list 840. By means of the dwell list 840, it is possible for the second processing path 830 to focus the processing efforts for true target detection where there is an increased possibility for presence of objects. The dwell list 840 comprises information where the probability of presence of objects exceeds a certain threshold. The SAD algorithm is described in greater detail in the sections which follow.

At an initial step 810, Range-Doppler (RD) matrixes are prepared. As noted above, this function block basically contains the implementation of a two-dimensional Fourier transform of the input time domain matrix, where the produced matrix has a range dimension as well as a Doppler dimension. Notably, there is one RD matrix for each Tx-Rx combination of every super-pulse. For example, assuming 2 Tx channels an 4 Rx channels, this results in 8 Tx-Rx combinations and therefore 8 RD matrices. The range resolution for the RD matrix is based on:

$$R_{RES} = \frac{N_S - 1}{N_S} \cdot \frac{C_0}{2 \cdot BW}$$

Wherein the bandwidth BW equals the frequency high (FH) minus the frequency low (FL) and where NS is the number of samples per Tx ramp. Velocity resolution, as noted above, is based on:

$$V_{RES} = \frac{C}{T_C * (F_H + F_L)}$$

The first processing path 820 begins with search processing 850 where the primary task of the search engine is to identify those Range-Doppler (RD) cells which most likely contain energy of radar targets. For this purpose, the consistency of the magnitudes of the transformed RD-matrices is evaluated one at a time. Since the individual pulses cannot be saved, it is necessary to sequentially work through the process and get the most important information in compressed form. In example embodiments, the sequential probability ratio test (SPRT) provides the framework for search processing. As described in WO2016188895 search processing may include sub-steps of noise estimation, log-likelihood function (LLF) matrix alignment, probability ratio computation and updating the LLF matrix.

In particular, the noise floor for all ranges is estimated in the Doppler dimension within the RD magnitude matrix. The median function is able to provide a relatively robust estimation. It is the nature of the Range-Doppler matrix that frequencies in the range dimension are changing as a function of time. The range-rate of the energy within a certain RD-cell can be derived from the cell index in the Doppler dimension. In order to keep track of the received energy the LLF matrix is altered with respect to this relation. As noted above, the search module is arranged to find Range-Doppler (RD) matrix elements which most likely contain energy of radar targets. For this purpose, the consistency of the magnitudes of the Range-Doppler matrix is evaluated one at a time. Since the individual pulses are not saved, it is necessary to sequentially work through the process and get the most important information in compressed form. This may for example be accomplished by combining the pulse blocks of one or more processing cycles with the aim to restore both the detection probability and the resolution using the SPRT algorithm. The ideal implementation of a sequential detection algorithm requires a decision to be made after every pulse block, where three decision outcomes are possible: No Target, Target Present, and No Decision. If the latter decision is made, then another pulse block is evaluated. The probability ratio computation step is arranged to perform sequential detection using the SPRT algorithm. In order to adapt this algorithm to radar sensors, a calculated signal magnitude, m, is assumed as based on the on-going collection of noisy radar signal observations, so far comprising N such observations. The function fo (m) is a probability density function for the calculated signal magnitude m, when an object is actually present at some specified magnitude, and the function fl (m) is the probability density function for the calculated signal magnitude m, when no such object is actually present. According to SPRT theory, the ratio, r, provides a measure of the relative probability of the object being present or not where:

$$r = \frac{fo(m)}{fi(m)}$$

In updating the LLF matrix, a target signal detection decision is made. For example, where r >A it may be decided that a target is present, while were r<B it may be decided that a target is not present. Otherwise additional observation may be required.

At the end of every radar signal processing cycle dwell-probe positioning is calculated (step 860). This includes identifying the loaded bins in the RD matrix (e.g., where r>A) and calculating dwell positions. In order to lose as little energy as possible during the dwelling process, it is necessary to put the measuring point to the optimum position. The calculation is basically the prediction of the target position using the current position, dwell duration, and the target speed represented by the Doppler index.

The second processing path 830 involves applying dwelling processing 870 and results in target detection 880. In dwelling processing 870, complex data is collected from the transformed superpulse matrix. Notably, the values which are copied from the data matrix are reflected in the dwell list 840. In target detection, dwell data is transformed via a proper window function for each dwell signal. All dwell signals are also converted into the frequency domain. A peak detection subroutine may then be applied based on a magnitude signal created from the complex FFT output. In particular, a detection threshold may be applied taking into account a noise floor for each signal. Radar parameter estimation is then applied where parameters such as range, Doppler and bearing are calculated for each target. For this purpose, it is necessary to consider the orthogonal neighboring cells in the three-dimensional signal space of every target peak. Notably, with the magnitudes of the neighbors one can apply 3-point interpolation.

The SAD algorithm can use improvement with respect to resolving speed ambiguity. For example, under one set of designed parameters, there is a speed ambiguity of 0.4m/s. Which leads to an issue of distinguishing the 0.4mps target from stationary target when these two targets being at same range (distance) and azimuth (velocity) bin. Thus the systems and methods described herein are intend to improve SAD speed measurement ambiguity performance.

One function of the SAD algorithm stems from specific implementation with respect to automotive radar systems. In particular, in the context of automotive radar systems, low host (the vehicle with the detector) speed (for example speed of less than 15m/s) reduces the range (distance) of interest. Indeed, at lower speeds there is no need to detect far away target objects (e.g., as far away as 150 meter). As a general rule a collision safety range can be applied which accounts for a time to impact. Thus, for example, a safety range of 3-5 seconds (e.g., 4 seconds) can be applied. At 20m/s a safety range of 4 seconds means that the necessary distance/range for resolving is only 80m. Thus, in general, detection range may be reduced based on the host speed. In the context, of a high speed environment (such as a highway environment) block processing may be avoided to save resources. Thus, the SAD algorithms may be employed to reduce memory demands. In contrast, for a low speed environment, fewer range bins are required to be resolved. Thus, block processing may be implemented to utilize the full potential of the calculation power and memory resource. For example, if the host speed is greater than 15m/s the SAD algorithm may be used to allow for the longer detection distance. If the speed is lower than 10 m/s, then the block processing algorithm is used to cover only the 50m detection range. Thus, in some embodiments, the SAD algorithm may be configured to selectively apply ambiguity resolution only where the host vehicle is in a predetermined range a predetermined velocity. In such embodiments, a lower velocity host vehicle may have a shorter required distance range for detection which may facilitate ambiguity resolution. Alternatively, ambiguity resolution may only be required where a target is within a predetermined range of the host vehicle. Again the predetermined range may be a dynamic range based on the velocity of the host vehicle.

In example embodiments, range resolution has an important role in the SAD approach. The higher the range resolution the better the performance of the search algorithm checking the consistency of Doppler vs. range rate. Therefore, the strategy of the waveform design is different than for the conventional processing. Here we start with the maximum allowed transmit bandwidth and adjust the rest of radar parameter. In some embodiments, different resolution requirements may be achieved via different component waveforms (e.g., accounting for different transmit channels). It should also be noted that there are two ways to include a second transmit channel into the SAD algorithm. Firstly, one can interleave transmit channels (interleave pulses). Secondly, one can alternate channels (alternate super-pulses). The main advantage of the second approach over the first approach is that it requires only half of memory to store the entrance RD matrix. The biggest disadvantage is that the pulse range interval (PRI) of the super-pulses would double as fast as with the first approach.

As noted herein, one advantage of the SAD algorithm is the ability to use target tracking between pulses to facilitate Doppler estimation. In particular, as a target's position changes velocity for a target can be estimated based on such a change in position between successive blocks (e.g., assuming a constant velocity). This velocity estimate can be utilized as a coarse prediction to help resolve the finer Doppler estimation with its limited Nyquist range. Notably, however, the SAD algorithm is somewhat reliant on being able to track individual targets. Thus, where multiple targets overlap (as shown in FIG. 2) it may be difficult to track target position and resolve Doppler measurements in that way. Thus, in some embodiments, ambiguity resolution processing, such as described herein may be applied to supplement the tracking approach of the SAD algorithm. For example, in some embodiments, ambiguity resolution may be applied to facilitate resolving Doppler measurements specifically in the case of overlapping targets. Otherwise processing power may be conserved.

Another advantage of the SAD algorithm discussed herein is the ability to apply to utilize component waveforms and windowing/sampling processes which are advantageously designed to meet different resolution specifications. For example, in some embodiments, different resolution specifications may be required based on characteristics such as target size, target identification, target speed, target position, target range, host vehicle speed, environment (such as highway vs city vs parking lot), etc. Thus, it may be advantages to utilize different component waveforms which, when combined, are able to meet the resolution specifications for each active scenario. For example, in some embodiments, a composite waveform may include a first component waveform that is able to resolve out to a greater range but with a lower velocity resolution and a second waveform component which is able to resolve out to a shorter range but with greater velocity resolution. Notably, these two composite waveforms may also simultaneously be applied to helping facilitate ambiguity resolution. In some embodiments, windowing/sampling may be applied to control the number of resolvable bins based on active scenarios. Thus, for example, memory load may be reduced when coarser range resolution is ok (such as at high velocities). The waveform variation examples described below further illustrate these concepts. For example, in some embodiments, fewer range bins may be processed, e.g., for certain component waveforms and/or scenarios, thereby reducing processor and memory load. In other embodiments, the same ADC sampling rate may be used regardless. In further embodiments, there may be a reduced sampling number for each ramp. The range processing bin/cell number for example can be reduced by half, so the total sampling point for each ramp or FFT points will be reduced by half, and the ramp time will be reduced by half, again reducing processor and memory load. The forgoing examples are to illustrating of a general concept of waveform and/or sampling/windowing parameters taking into consideration balanced demands for different scenarios while allowing for efficient use of resources.

Whereas many alterations and modifications of the disclosure will no doubt become apparent to a person of ordinary skill in the art after having read the foregoing description, it is to be understood that the particular embodiments shown and described by way of illustration are in no way intended to be considered limiting. Further, the subject matter has been described with reference to particular embodiments, but variations within the scope of the disclosure will occur to those skilled in the art.

## Claims

1. A radar system (10) for a host vehicle comprising:

   one or more signal generators (20) configured for generating a composite linear frequency modulated continuous waveform formed by combining first and second, different, component waveforms; and
   a detector (22) for detecting reflected signals from the composite waveform and
   determining velocity and distance measurements of a target relative to the host vehicle;
   wherein the first and second component waveforms are selected such that the composite waveform is able to simultaneously meet two different sets of resolution requirements with respect to at least one of: the velocity measurement of the target vehicle relative to the host vehicle and the distance measurement of the target vehicle relative to the host vehicle; and
   wherein each of the different sets of resolution requirements is pre-selected for a different detection scenario.

2. The radar system (10) of claim 1, wherein the first and second component waveforms each include a series of pulses, and optionally, wherein the pulses are coherent.

3. The radar system (10) of claim 2, wherein the first component waveform has a different pulse repetition pattern than the second pulse repetition frequency, wherein a first pulse repetition pattern of the first component waveform is selected to meet a first predetermined set of resolution requirements applicable for a first detection scenario and a second pulse repetition pattern of the second component waveform is selected to meet a second predetermined set of resolution requirements applicable for a second detection scenario, and optionally, wherein the first pulse repetition pattern has a different pulse repetition frequency than the second pulse repetition pattern.

4. The radar system (10) of claim 2 or claim 3, wherein each component waveform includes a repeated super-pulse sequence of N super-pulses with a predetermined cycle time Tc, each super-pulse cycle including an active phase with a time Ta < Tc and an inactive phase with a time Ti < Tc, wherein Ta + Ti = Tc, the active phase having a sequence of a plurality of M pulses each with a pulse duration Td, wherein optionally, each component waveform has a different cycle time Tc for its repeated super-pulse sequence.

5. The radar system (10) of claim 4, wherein the different cycle time Tc has a different inactive phase Ti or a different active phase Ta including one or more of: a different number of pulses per super-pulse or a different pulse duration Td.

6. The radar system (10) of claim 5, wherein each pulse further includes a change in frequency between low and high pulse frequencies (Fl and Fh), wherein, optionally, each component waveform includes one or more of: a different low pulse frequencies Fl or a different high pulse frequency Fh.

7. The radar system (10) of any preceding claim, wherein oscillations in each of the first and component waveforms vary between low and high pulse frequencies (Fl and Fh) and optionally, wherein each component waveform has one or more of: a different low pulse frequency Fl or a different high pulse frequency Fh.

8. The radar system (10) of any preceding claim, wherein the first and second component waveforms are each continuous waveforms.

9. The radar system (10) of any preceding claim, wherein the first and second component waveforms are interleaved or alternated to form the composite waveform.

10. The radar system (10) of any preceding claim, wherein a sampling of the composite waveform is constant or a sampling of the composite waveform is variable for each of the component waveforms.

11. The radar system (10) of any preceding claim, wherein the different sets of resolution requirements includes a first set of resolution requirements for a first scenario involving increased maximum distance resolution requirements and reduced velocity and range accuracy requirements and a second set of resolution requirements for a second scenario involving decreased maximum range requirements and increased velocity and range accuracy requirements.

12. The radar system (10) of any preceding claim, wherein the each set of resolution requirements includes different accuracy requirements for at least one of: the velocity measurement of the target vehicle relative to the host vehicle and the distance measurement of the target vehicle relative to the host vehicle.

13. The radar system (10) of any preceding claim, wherein the each set of resolution requirements includes different maximum, minimum or resolvable range requirements for at least one of: the velocity measurement of the target vehicle relative to the host vehicle and the distance measurement of the target vehicle relative to the host vehicle.

14. The radar system (10) of any preceding claim, wherein each of the different sets of resolution requirements is for a different scenario described by target size, target identification, target speed, target position, target range, host vehicle speed and/or environment.

15. The radar system (10) of any preceding claim, further comprising a processor for ambiguity resolution, the processor configured to determine a true velocity for a target based determining corresponding Doppler bins that correctly reflect ambiguous velocity calculations for first and second component waveforms.

**Patentansprüche**

1. Radarsystem (10) für ein Host-Fahrzeug, das Folgendes umfasst:

einen oder mehrere Signalgeneratoren (20), die ausgelegt sind, um eine modulierte kontinuierliche Verbundwellenform mit linearer Frequenz zu erzeugen, die durch das Kombinieren von einer ersten und einer zweiten, unterschiedlichen Komponentenwellenform gebildet wird; und
einen Detektor (22) zum Detektieren reflektierter Signale von der Verbundwellenform und zum Bestimmen von Geschwindigkeits- und Abstandsmessungen eines Ziels in Bezug auf das Host-Fahrzeug; wobei die erste und die zweite Komponentenwellenform so ausgewählt sind, dass die Verbundwellenform in der Lage ist, gleichzeitig zwei unterschiedliche Sätze von Auflösungsanforderungen in Bezug auf zumindest eines der folgenden zu erfüllen: die Geschwindigkeitsmessung des Zielfahrzeugs in Bezug auf das Host-Fahrzeug und die Abstandsmessung des Zielfahrzeugs in Bezug auf das Host-Fahrzeug; und wobei jeder der unterschiedlichen Sätze von Auflösungsanforderungen für ein unterschiedliches Detektionsszenario vorab ausgewählt wird.

2. Radarsystem (10) nach Anspruch 1, wobei die erste und die zweite Komponentenwellenform jeweils eine Reihe von Impulsen umfassen, wobei die Impulse gegebenenfalls kohärent sind.

3. Radarsystem (10) nach Anspruch 2, wobei die erste Komponentenwellenform ein anderes Impulswiederholungsmuster als die zweite Impulswiederholungsfrequenz aufweist, wobei ein erstes Impulswiederholungsmuster der ersten Komponentenwellenform ausgewählt wird, um einen ersten vorbestimmten Satz von Auflösungsanforderungen zu erfüllen, die für ein erstes Detektionsszenario anwendbar sind, und ein zweites Impulswiederholungsmuster der zweiten Komponentenwellenform ausgewählt wird, um einen zweiten vorbestimmten Satz von Auflösungsanforderungen zu erfüllen, die für ein zweites Detektionsszenario anwendbar sind, und wobei das erste Impulswiederholungsmuster eine andere Impulswiederholungsfrequenz aufweist als das zweite Impulswiederholungsmuster.

4. Radarsystem (10) nach Anspruch 2 oder 3, wobei jede Komponentenwellenform eine wiederholte Superimpulssequenz von N-Superimpulsen mit einer vorbestimmten Periodenzeit Tc umfasst, wobei jede Superimpulsperiode eine aktive Phase mit einer Dauer Ta < Tc und einer inaktiven Phase mit einer Zeit Ti < Tc umfasst, wobei Ta + Ti = Tc ist, wobei die aktive Phase eine Sequenz von einer Vielzahl von M Impulsen aufweist, die jeweils eine Impulsdauer von Td aufweisen, wobei jede Komponentenwellenform gegebenenfalls eine unterschiedliche Periodenzeit Tc für die wiederholte Superimpulssequenz aufweist.

5. Radarsystem (10) nach Anspruch 4, wobei die unterschiedliche Periodenzeit Tc eine unterschiedliche inaktive Phase Ti oder eine unterschiedliche aktive Phase Ta aufweist, die eines oder mehrere der folgenden aufweist: eine unterschiedliche Anzahl von Impulsen pro Superimpuls oder eine unterschiedliche Impulsdauer Td.

6. Radarsystem (10) nach Anspruch 5, wobei jeder Impuls ferner eine Frequenzänderung zwischen Niedrig- und Hochimpulsfrequenzen (Fl und Fh) umfasst, wobei jede Komponentenwellenform gegebenenfalls eines oder mehrere der folgenden umfasst: unterschiedliche Niedrigimpulsfrequenzen Fl oder unterschiedliche Hochimpulsfrequenzen Fh.

**7.** Radarsystem (10) nach einem der vorangegangenen Ansprüche, wobei die Schwingungen in jeder der ersten und Komponentenwellenform zwischen Niedrig- und Hochimpulsfrequenzen (Fl und Fh) variieren und wobei jede Komponentenwellenform gegebenenfalls eines oder mehrere der folgenden aufweist: eine unterschiedliche Niedrigimpulsfrequenz Fl oder eine unterschiedliche Hochimpulsfrequenz Fh.

**8.** Radarsystem (10) nach einem der vorangegangenen Ansprüche, wobei die erste und die zweite Komponentenwellenform jeweils kontinuierliche Wellenformen sind.

**9.** Radarsystem (10) nach einem der vorangegangenen Ansprüche, wobei die erste und die zweite Komponentenwellenform verschachtelt oder alterniert werden, um die Verbundwellenform zu bilden.

**10.** Radarsystem (10) nach einem der vorangegangenen Ansprüche, wobei ein Abtasten der Verbundwellenform konstant ist oder ein Abtasten der Verbundwellenform für jede der Komponentenwellenformen variabel ist.

**11.** Radarsystem (10) nach einem der vorangegangenen Ansprüche, wobei die verschiedenen Sätze von Auflösungsanforderungen einen ersten Satz von Auflösungsanforderungen für ein erstes Szenario, das höhere Maximalabstandsauflösungsanforderungen und reduzierte Geschwindigkeits- und Spielraumpräzisionsanforderungen umfasst, und einen zweiten Satz von Auflösungsanforderungen für ein zweites Szenario umfasst, das niedrigere Maximalabstandsauflösungsanforderungen und höhere Geschwindigkeits- und Spielraumpräzisionsanforderungen umfasst.

**12.** Radarsystem (10) nach einem der vorangegangenen Ansprüche, wobei jeder Satz von Auflösungsanforderungen unterschiedliche Präzisionsanforderungen für zumindest eines der folgenden umfasst: die Geschwindigkeitsmessung des Zielfahrzeugs in Bezug auf das Host-Fahrzeug und die Abstandsmessung des Zielfahrzeugs in Bezug auf das Host-Fahrzeug.

**13.** Radarsystem (10) nach einem der vorangegangenen Ansprüche, wobei jeder Satz von Auflösungsanforderungen unterschiedliche Maximal-, Mindest- oder lösbare Spielraumanforderungen für zumindest eines der folgenden umfasst: die Geschwindigkeitsmessung des Zielfahrzeugs in Bezug auf das Host-Fahrzeug und die Abstandsmessung des Zielfahrzeugs in Bezug auf das Host-Fahrzeug.

**14.** Radarsystem (10) nach einem der vorangegangenen Ansprüche, wobei jeder der verschiedenen Sätze von Auflösungsanforderungen für ein unterschiedliches Szenario ist, das durch Zielgröße, Zielidentifizierung, Zielgeschwindigkeit, Zielposition, Zielspielraum, Host-Fahrzeuggeschwindigkeit und/oder Umgebung beschrieben wird.

**15.** Radarsystem (10) nach einem der vorangegangenen Ansprüche, das ferner einen Prozessor zur Mehrdeutigkeitsauflösung umfasst, wobei der Prozessor konfiguriert ist, um eine echte Geschwindigkeit für ein Ziel auf Grundlage der Bestimmung entsprechender Doppler-Bins zu bestimmen, die mehrdeutige Geschwindigkeitsberechnungen für die erste und zweite Komponentenwellenform korrekt wiedergeben.

**Revendications**

**1.** Système radar (10) pour un véhicule hôte comprenant :

un ou plusieurs générateurs de signaux (20) configurés de manière à générer une forme d'onde continue composite modulée en fréquence linéaire formée en combinant des première et seconde formes d'onde composantes différentes ; et
un détecteur (22) destiné à détecter des signaux réfléchis à partir de la forme d'onde composite et à déterminer des mesures de vitesse et de distance d'une cible par rapport au véhicule hôte ;
dans lequel les première et seconde formes d'onde composantes sont sélectionnées de sorte que la forme d'onde composite est en mesure de satisfaire simultanément deux ensembles différents d'exigences de résolution en ce qui concerne au moins l'une des mesures parmi : la mesure de vitesse du véhicule cible par rapport au véhicule hôte et la mesure de distance du véhicule cible par rapport au véhicule hôte ; et
dans lequel chacun des ensembles différents d'exigences de résolution est présélectionné pour un scénario de détection différent.

**2.** Système radar (10) selon la revendication 1, dans lequel les première et seconde formes d'onde composantes incluent chacune une série d'impulsions, et facultativement, dans lequel les impulsions sont cohérentes.

**3.** Système radar (10) selon la revendication 2, dans lequel la première forme d'onde composante présente un motif de répétition d'impulsion différent de celui de la seconde fréquence de répétition d'impulsion, dans lequel un premier motif de répétition d'impulsion de la première forme d'onde composante est sélectionné pour satisfaire un premier ensemble prédéterminé d'exigences de résolution applicables pour un premier scénario de détection, et un second motif de répétition d'impulsion de la seconde forme d'onde composante est sélectionné pour satisfaire un second ensemble prédéterminé d'exigences de résolution applicables pour un second scénario de détection, et facultativement, dans lequel le premier motif de répétition d'impulsion présente une fréquence de répétition d'impulsion différente du celle du second motif de répétition d'impulsion.

4. Système radar (10) selon la revendication 2 ou 3, dans lequel chaque forme d'onde composante inclut une séquence de super-impulsions répétée de « N » super-impulsions avec un temps de cycle prédéterminé « Tc », chaque cycle de super-impulsion incluant une phase active avec un temps Ta < Tc et une phase inactive avec un temps Ti < Tc, dans lequel Ta + Ti = Tc, la phase active présentant une séquence d'une pluralité de « M » impulsions, dont chacune présente une durée d'impulsion « Td », dans lequel, facultativement, chaque forme d'onde composante présente un temps de cycle différent « Tc » pour sa séquence de super-impulsions répétée.

5. Système radar (10) selon la revendication 4, dans lequel le temps de cycle différent « Tc » présente une phase inactive différente « Ti » ou une phase active différente « Ta » incluant un ou plusieurs des éléments parmi : un nombre différent d'impulsions par super-impulsion ou une durée d'impulsion différente « Td ».

6. Système radar (10) selon la revendication 5, dans lequel chaque impulsion inclut en outre un changement de fréquence entre des fréquences d'impulsion basses et hautes (Fl et Fh), dans lequel, facultativement, chaque forme d'onde composante inclut une ou plusieurs fréquences parmi : une fréquence d'impulsion basse différente « Fl » ou une fréquence d'impulsion haute différente « Fh ».

7. Système radar (10) selon l'une quelconque des revendications précédentes, dans lequel des oscillations dans chacune des première et seconde formes d'onde composantes varient entre des fréquences d'impulsion basses et hautes (Fl et Fh) et, facultativement, dans lequel chaque forme d'onde composante présente une ou plusieurs fréquences parmi : une fréquence d'impulsion basse différente « Fl » ou une fréquence d'impulsion haute différente « Fh ».

8. Système radar (10) selon l'une quelconque des revendications précédentes, dans lequel les première et seconde formes d'onde composantes sont chacune des formes d'onde continues.

9. Système radar (10) selon l'une quelconque des revendications précédentes, dans lequel les première et seconde formes d'onde composantes sont entrelacées ou alternées en vue de former la forme d'onde composite.

10. Système radar (10) selon l'une quelconque des revendications précédentes, dans lequel un échantillonnage de la forme d'onde composite est constant ou un échantillonnage de la forme d'onde composite est variable pour chacune des formes d'onde composantes.

11. Système radar (10) selon l'une quelconque des revendications précédentes, dans lequel les ensembles différents d'exigences de résolution incluent un premier ensemble d'exigences de résolution pour un premier scénario impliquant des exigences accrues de résolution de distance maximale et des exigences réduites de précision de vitesse et de distance et un second ensemble d'exigences de résolution pour un second scénario impliquant des exigences réduites de distance maximale et des exigences accrues de précision de vitesse et de distance.

12. Système radar (10) selon l'une quelconque des revendications précédentes, dans lequel ledit chaque ensemble d'exigences de résolution inclut différentes exigences de précision pour au moins l'une des mesures parmi : la mesure de vitesse du véhicule cible par rapport au véhicule hôte et la mesure de distance du véhicule cible par rapport au véhicule hôte.

13. Système radar (10) selon l'une quelconque des revendications précédentes, dans lequel ledit chaque ensemble d'exigences de résolution inclut différentes exigences de distance maximale, minimale ou résoluble pour au moins l'une des mesures parmi : la mesure de vitesse du véhicule cible par rapport au véhicule hôte et la mesure de distance du véhicule cible par rapport au véhicule hôte.

14. Système radar (10) selon l'une quelconque des revendications précédentes, dans lequel chacun des ensembles différents d'exigences de résolution est destiné à un scénario différent décrit en fonction d'une taille de cible, d'une identification de cible, d'une vitesse de cible, d'une position de cible, d'une distance de cible, d'une vitesse et/ou d'un environnement de véhicule hôte.

15. Système radar (10) selon l'une quelconque des revendications précédentes, comprenant en outre un processeur pour une résolution d'ambiguïté, le processeur étant configuré de manière à déterminer une vitesse réelle pour une cible sur la base de la détermination de fichiers Doppler correspondants qui reflètent correctement des calculs de vitesse ambiguë pour des première et seconde formes d'onde composantes.

Fig. 1

Fig. 2

**Fig. 3**

**Fig. 4**

0.05 m/s

1.2 m/s

0      0.1    0.2    0.3    0.4              0.8           1.2 m/s

## Fig. 5

0.05 m/s

1.2 m/s

0      0.1    0.2    0.3    0.4    0.6    0.8           1.2 m/s

## Fig. 6

0.05 m/s

1.2 m/s

0      0.1    0.2    0.3    0.4    0.6    0.8           1.2 m/s

0.05 m/s

1.2 m/s

0      0.1    0.2    0.3    0.4    0.6    0.8           1.2 m/s

## Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 64363617
- US 64364417
- US 20150002332 A1
- WO 2016188895 A